# EUROPEAN PATENT SPECIFICATION

(11) **EP 2 540 494 B1**
(45) Date of publication and mention of the grant of the patent: **19.11.2014**
(21) Application number: 11744583.3
(22) Date of filing: 10.02.2011
(51) Int. Cl.: C09D 127/12, C08L 27/12, C08L 61/04, C08L 63/04, C08K 13/02

(54) **FLUORORUBBER-METAL LAMINATE**
FLUORKAUTSCHUK-METALL-LAMINAT
STRATIFIÉ CAOUTCHOUC FLUORÉ-MÉTAL

(30) Priority: 22.02.2010 JP 2010035906
(43) Date of publication of application: 02.01.2013
(73) Proprietor: NOK Corporation, Minato-ku Tokyo 105-8585 (JP)
(72) Inventor: KIMURA Natsumi, Fujisawa-shi Kanagawa 251-0042 (JP); KITAJIMA Yasuaki, Fujisawa-shi Kanagawa 251-0042 (JP)
(74) Representative: Beckmann, Claus
(86) International application number: PCT/JP2011/052884
(87) International publication number: WO 2011/102296

(56) References cited:
- JP-A- 3 149 465
- JP-A- 6 248 115
- JP-A- 10 060 411
- JP-A- 11 001 678
- JP-A- 11 034 226
- JP-A- 52 045 634
- JP-A- 2006 218 629
- JP-A- 2007 277 340

## Description

### TECHNICAL FIELD

The present invention relates to a fluororubber-metal laminate sheet, and more particularly a fluororubber-metal laminate sheet for use as effective automobile gaskets, etc.

### BACKGROUND ART

A metal gasket comprising a bead sheet and a coating material provided thereon by coating the bead sheet with a rubber-mixed paint comprising 100 parts by weight of fluororubber, 50-200 parts by weight of an inorganic lubricant such as graphite, carbon, and molybdenum dioxide, and 4-16 parts by weight of a silane coupling agent, followed by vulcanization, has been so far proposed as a gasket metal sheet coated with a coating material capable of maintaining high slippability and non-stickyness for a long time without any breaking or peeling problem by controlling the rubber flow (see Patent Document 1).

The object of addition of the silane coupling agent contained in the proposed rubber-mixed paint is to control the rubber flow, that is, to increase the rubber stiffness, whereas the anti-freezing liquid resistance, or the long-term durabilities such as oil resistance, heat resistance, etc. are deteriorated. The inorganic filler showing low friction factor is hard to disperse, and the particle size of the filler is consequently larger, and particularly in cylinder head gaskets, etc. in the product rubber layer thickness as small as about 25 µ m the seal surface is much roughened, giving an adverse effect on the sealability. Furthermore, when the proportion of admixed amine-containing silane coupling agent exceeds 4 parts by weight on the basis of 100 parts by weight of fluororubber, the pot life of the coating solution, i.e. the fluororubber-mixed paint, is considerably deteriorated, where the productivity is substantially lost.

In the gasket raw materials generally using rubber-metal laminate sheets, metallic sheets are used upon applying thereto a chromating treatment or a chromating substitute treatment (hexavalent Cr-free treatment, or non-chromating treatment such as iron phosphatizing treatment, zinc phosphatizing treatment, etc.). However, the chromating treatment involves an environmental load problem, and rubber-metal laminate sheets produced by application of a chromating substitute treatment for the metal sheet, followed by multi-layer coating also have a heavy environmental load from the total product side, in view of the complicated treating process, and further are costwise inadvantageous.

### PRIOR ART DOCUMENT

### PATENT DOCUMENT

Patent Document 1 : JP-A-2004-68886
Patent Document 2 : JP-A-61-12741
Patent Document 3 : WO2010/029851

### OUTLINE OF THE INVENTION

### PROBLEM TO BE SOLVED BY THE INVENTION

The present applicant has previously proposed a fluororubber-metal laminate sheet in which a vulcanized fluororubber layer is laminated on a metallic sheet that is free from chromating treatment or chromating substitute treatment, the fluororubber-metal laminate sheet having various excellent properties, such as sealability, compression resistance, air-heated aging resistance, anti-freezing liquid resistance, oil resistance, sticking resistance, abrasion resistance, etc. The fluororubber-metal laminate sheet, which comprises a metallic sheet and a vulcanized fluororubber layer provided on the metallic sheet by applying a composition comprising (A) 100 parts by weight of polyol-vulcanizable fluororubber, (B) 10-50 parts by weight of an amorphous graphite, (C) 1-15 parts by weight of a phenol resin, (D) 1-4 parts by weight of a silane coupling agent, (E) 0.5-8 parts by weight of a polyol-based vulcanizing agent, and (F) 0.5-6 parts by weight of a vulcanization accelerator to the metallic sheet, followed by vulcanization of the fluororubber composition to form laminate. As the silane coupling agent of Component (D), at least one of amino group-containing alkoxysilane and vinyl group-containing alkoxysilane is preferably used (Patent Document 3).

The fluororubber composition for use in the formation of such a fluororubber-metal laminate sheet is characterized by :
(1) applying the fluororubber composition as a one-pot type coating agent to a non-chromating treatment metallic sheet, i.e. Cr-free, not based on a multi-layer coating type, i.e. less VOC discharge and smaller environmental load, and the process is not complicated, leading to processing cost reduction,
(2) selectively using a specific graphite such as amorphous graphite, making the particle size to 20 µ m or less easily in the rubber solution, i.e. distinguished in the surface smoothness and initial sealability, with less delamination between the layers and more distinguished in the non-stickyness than flaky graphite, i.e. distinguished in the reworkability, and having lubricating property and distinguished in the abrasion resistance, similarly ordinary graphites,
   and
(3) using the phenol resin and the silane coupling agent at the same time, i.e. ensuring the anti-freezing liquid resistance and the long-term durability such as oil resistance and heat resistance.

However, as for this fluororubber-metal laminate sheet, further improvement is desired in terms of sealability showing the surface smoothness of product, compression resistance showing rubber flowability, etc. In addition, regarding the fluororubber composition solution (rubber solution) used in the production of the fluororubber-metal laminate sheet, entry of water abnormally raises the viscosity of the solution depending on the temperature of the environment, causing a situation where the composition solution cannot be applied to the metallic sheet.

The object of the present invention is to provide a fluororubber-metal laminate sheet, which comprises a metallic sheet and a vulcanized fluororubber layer provided on the metallic sheet by applying a composition comprising (A) a polyol-vulcanizable fluororubber, (B) an amorphous graphite, (C) a phenol resin, (D) a silane coupling agent, (E) a polyol-based vulcanizing agent, and (F) a vulcanization accelerator to the metallic sheet, followed by vulcanization of the fluororubber composition to form laminate, and which has further improved sealability, compression resistance and durability.

### MEANS FOR SOLVING THE PROBLEM

The object of the present invention can be attained by a fluororubber-metal laminate sheet, which comprises a metallic sheet and a vulcanized fluororubber layer provided on the metallic sheet by applying a fluororubber composition comprising (A) 100 parts by weight of a polyol-vulcanizable fluororubber, (B) 10-50 parts by weight of an amorphous graphite, (C) 15-50 parts by weight of a phenol resin, (D) 2-9 parts by weight of an epoxy group- or (meth)acryloxy group-containing silane coupling agent, (E) 3- 20 parts by weight of a polyol-based vulcanizing agent, and (F) 2-9 parts by weight of a vulcanization accelerator to the metallic sheet, followed by vulcanization of the fluororubber composition to form laminate. Here, the (meth) acryloxy group refers to a methacryloxy group or an acryloxy group.

### EFFECT OF THE INVENTION

Because of the use of an epoxy group- or (meth)acryloxy group-containing silane coupling agent as the silane coupling agent of Component (D), the fluororubber-metal laminate sheet of the present invention achieves further improvement in sealability showing the surface smoothness of product, and in compression resistance showing rubber flowability, in addition to the aforementioned effects (1) to (3) of the invention. Moreover, the pot life of the fluororubber composition solution can be significantly extended. Furthermore, abnormal increase in viscosity due to entry of water from the outside, and the occurrence of non-compliant products caused thereby can be prevented. Thus, the stability of the composition solution can also be improved.

### EMBODIMENTS FOR CARRYING OUT THE INVENTION

The metallic sheets for use in the present invention include surface-unroughened stainless steel sheets, SPCC steel sheets, aluminum sheets, etc. and surface-roughened stainless steel sheet, SPCC steel sheets, aluminum sheets, etc. by shot blasting, scotch blasting, hair-line finishing, dull finishing. Generally, solvent-defatted or alkali-defatted ones can be used as such. Metallic sheets having a thickness of 0.1 to 1mm can be used for the gasket material application.

The polyol-vulcanizable fluororubber for use as Component (A) of the present fluororubber composition includes, for example, homopolymers of vinylidene fluoride, hexafluoropropene, pentafluoropropene, trifluoroethylene, trifluorochloroethylene, tetrafluoroethylene, vinyl fluoride, perfluoroacrylic acid ester, perfluoroalkyl acrylate, perfluoro(methyl vinyl ether), perfluoro(ethyl vinyl ether), perfluoro(propyl vinyl ether), etc.; their atlemating copolymers or their copolymers with propylene. Preferable are vinylidene fluoride-hexafluoropropene copolymer, vinylidene fluoride-hexafluoropropene-tetrafluoroethylene terpolymer and tetrafluoroethylene-propylene copolymer. Practically, commercially available polyol-vulcanizable fluororubber can be generally used as such.

The polyol-based vulcanizing agent of Component (E) for use as a vulcanizing agent for the polyol-vulcanizable fluororubber of Component (A) includes, for example, 2,2-bis(4-hydroxyphenyl)propane [bisphenol A], 2,2-bis(4-hydroxyphenyl)perfluoropropane [bisphenol AF], bis(4-hydroxyphenyl)sulfone [bisphenol S], 2,2-bis(4-hydroxyphenyl)methane [bisphenol F], bisphenol A-bis(diphenylphosphate), 4,4'-dihydroxydiphenyl, and 2,2-bis(4-hydroxyphenyl)butane. Preferable are bisphenol A and bisphenol AF. They can be in the form of alkali metal salts or alkaline earth metal salts. The polyol-based vulcanizing agent can be used generally in a proportion of 3 to 20 parts by weight, preferably 5 to 15 parts by weight, on the basis of 100 parts by weight of polyol-vulcanizable fluororubber. The polyol-based vulcanizing agent can be also used as a master batch with the fluororubber.

The vulcanization accelerator for use as Component (F) in the present invention includes quaternary onium salts such as quaternary phosphonium salts or quaternary ammonium salts. Preferable are quaternary phosphonium salts. The onium salt can be used in a proportion of 2 to 9 parts by weight, preferably 4 to 7 parts by weight, on the basis of 100 parts by weight of polyol-vulcanizable fluororubber. The vulcanization accelerator can be also used as a master batch with the fluororubber.

The quaternary phosphonium salts are compounds represented by the following general formula:

[PR₁R₂R₃R₄] ⁺X⁻

where R₁ to R₄ are alkyl groups having 1-25 carbon atoms, alkoxyl groups, aryl groups, alkylaryl groups, aralkyl groups or polyoxyalkylene groups, two or three of which can form a heterocyclic group together with P, and X is an anion of Cl⁻, Br⁻, I⁻, or HSO₄⁻, H₂PO₄⁻, RCOO⁻, ROSO₂⁻ or CO₃²⁻ and include, for example, tetraphenylphosphonium chloride, benzyltriphenylphosphonium bromide, benzyltriphenylphosphonium chloride, triphenylmethoxymethylphosphonium chloride, triphenylmethylcarbonylmethylphosphonium, chloride, triphenylethoxycarbonylmethylphosphonium chloride, trioctylbenzylphosphonium chloride, trioctylmethylphosphonium chloride, trioctylethylphosphonium acetate, tetraoctylphosphonium chloride and trioctylethylphosphonium dimethylphosphate. The quaternary phosphonium salts can be equimolar molecular compounds with active hydrogen-containing aromatic compounds such as polyhydroxyaromatic compounds, as disclosed in Patent Document 2.

The quaternary ammonium compounds are compounds represented by the following general formula :

[NR₁R₂R₃R₄] ⁺X⁻

where R₁-R₄ and X⁻ are the same meanings as defined above) and include, for example, 1-alkylpyridinium salts, 5-aralkyl-1,5-diazabicyclo[4,3,0]-5-nonenium salts and 8-aralkyl-1,8- diazabicyclo[5,4,0]-7-undecenium salts.

The amorphous graphite for use as Component (B) in the present invention can be recovered from carbon beds in the sedimentary rocks, etc. and has a good lubricability equivalent to that of other kinds of graphites, and also has a distinguished abrasion resistance. Furthermore, it has less delamination between layers and more distinguished non-stideyness than those of flaky graphite, and also has distinguished sealability and compression resistance as will be described later. The amorphous graphite can be used in a proportion of 10 to 50 parts by weight, preferably 25 to 40 parts by weight, on the basis of 100 parts by weight of polyol-vulcanizable fluororubber. When it is used in a proportion of less than the defined proportion, the non-stickyness and the abrasion resistance will be deteriorated, whereas in a proportion of more than the defined proportion the compression resistance and the abrasion resistance will be deteriorated.

The amorphous graphite having a maximum particle size of not more than 45 µm, and an average particle size of not more than 20 µm can be used. When other graphites than the amorphous graphite are used even on the same average particle size level, the dispersed particle size in the rubber solution will be increased, causing a sealability problem as well as a compression resistance problems.

The phenol resin for use as Component (C) includes, for example, epoxy-modified phenol resin, novolak type phenol resin derived from p-substituted phenol and resol type phenol resin, preferably epoxy-modified phenol resin, and can be used in a proportion of 15 to 50 parts by weight, preferably 20 to 40 parts by weight, on the basis of 100 parts by weight of polyol-vulcanizable fluororubber. When the phenol resin is in a proportion of less than the defined proportion, the oil resistance and the air-heated aging resistance will be deteriorated, whereas in a proportion of more than the defined proportion the abrasion resistance and the air-heated aging resistance will be deteriorated.

The phenol resin for use in the present invention will be exemplified below :
Epoxy-modified phenol resin : 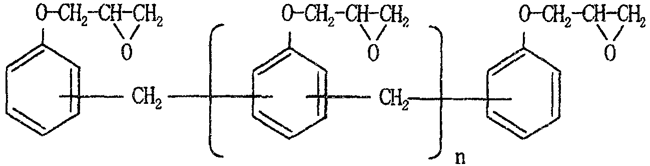 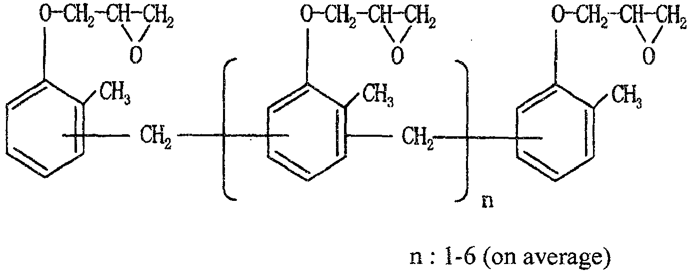
Novolak type phenol resin derived from p-alkyl-substituted phenol: 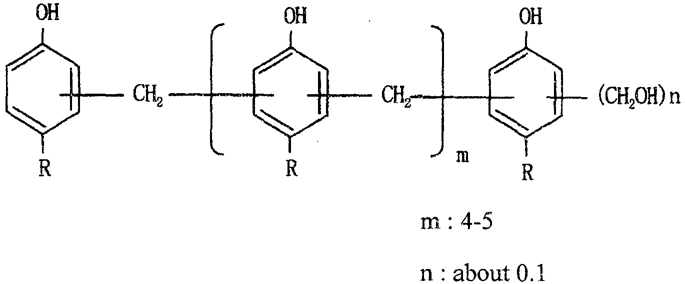
Resol type phenol resin :

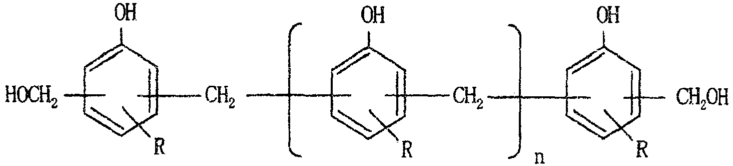

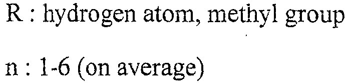

The silane coupling agent for use as Component (D) includes, for example, epoxy group-containing alkoxysilanes, such as γ-glycidoxypropyltriethoxy, γ-glycidoxypropyltrimethoxysilane, and β-(3,4-epoxycyclohexyl)ethyltrimethoxysilane, or (meth)acryloxy group-containing alkoxysilanes, such as γ-methacryloxypropyltriethoxysilane, γ-methacryloxypropyltrimethoxysilane, γ-acryloxypropyltriethoxysilane, and γ-acryloxypropyltrimethoxysilane.

The silane coupling agent can be used in a proportion of 2 to 9 parts by weight, preferably 3 to 7 parts by weight, in terms of solid matters, on the basis of 100 parts by weight of polyol-vulcanizable fluororubber. When the silane coupling agent is in a proportion of less than the defined proportion, the compression resistance and the air-heated aging resistance will be deteriorated, whereas in a proportion of more than the defined proportion the pot life will be considerably shortened, and the anti-freezing liquid resistance and the air-heated aging resistance will be deteriorated.

The fluororubber composition comprising the afore-mentioned essential compounds can further contain various fillers such as carbon black, silica, titanium oxide, alumina, iron oxide red, clay, calcium carbonate and PTFE powder. From the viewpoint of reinforcement, carbon black, preferably MT carbon black or silica can be used. Furthermore, divalent metal oxides or hydroxides such as magnesium oxide, zinc oxide, calcium oxide and calcium hydroxide, or basic magnesium-aluminum hydrooxycarbonate hydrate (hydrotalcite), can be used as an acid acceptor.

The fluororubber composition appropriately containing any other necessary compounding ingredients can be prepared by kneading by a tightly sealed type kneading machine such as Intermix, a kneader or a Banbury mixer or through open rolls, where hydrocarbon-based wax or silicone-based wax can be used, if necessary, as a processing aid.

The fluororubber layer can be laminated on a metallic sheet generally by applying thereto the fluororubber composition as a one-pot type coating agent. The fluororubber coating solution can be prepared as an organic solvent solution having a solid matter concentration adjusted to 20 to 60wt.%, preferably 25 to 50wt.%, by dissolving or dispersing the fluororubber composition with the ordinary rotating type stirrer or a high shearing type dispersing machine such as a homogenizer or a ball mill, and then with three-rolls, where a commercially available silicone-based deforming agent can be used, if necessary.

The organic solvent for use preferably in the formation of a fluororubber coating solution as a one-pot type coating agent includes, for example, ketones such as methyl ethyl ketone, 2-butanone, di-n-propyl ketone, diisobutyl ketone, phorone, isophorone or cyclohexanone, or alcohols such as methanol, ethanol, isopropanol, n-butanol, amyl alcohol or heptanol. Mixed solvent of ketones and alcohols can be also used.

The organic solvent solution of fluororubber composition so prepared can be applied as one-pot type coating agent directly to the surface of a metallic sheet free from either chromating treatment or chromating substitute treatment to a desired coating thickness, preferably dried thickness of 10 to 100 µm, preferably 20 to 30 µm, by coating with a knife coater, a flow coater or a roll coater, or by screen printing process, followed by drying and oven vulcanization at 150° to 230°C for 2 to 30 minutes, thereby forming a fluororubber-metal laminate sheet.

A liquid dispersion comprising a lubricating component such as graphite, PTFE molybdenum dioxide, carbon black or paraffin wax as the main component, and a binder such as cellulose resin, acrylic resin, polybutadiene resin or urethane resin, as dispersed in an organic solvent such as toluene, or water, can be applied to the vulcanized fluororubber layer by coating, if necessary, thereby forming a non-sticking layer having a thickness of 1 to 10 µm to prevent seizing or sticking.

### EXAMPLES

The present invention will be described in detail below, referring to Examples.

### COMPARATIVE EXAMPLE 1

| | Parts by weight |
|---|---|
| Fluororubber (Viton A-200, a product of DuPont) | 100 |
| MT carbon black (N990) | 20 |
| White carbon (Nipsil ER, a product of Toso-Silica Co.) | 10 |
| Magnesium oxide (Magnesia #30, a product of Kyowa Chemical Co.) | 5 |
| Amorphous graphite (A-O, a product of Nichiden Carbon Co,; max. particle size : 45 *µ* m ; average particle size : 13 *µ* m) | 30 |
| Vulcanizing agent (Curative #30, a product of DuPont ; bisphenol AF : 50wt.%, and fluororubber (Viton E-45) : 50wt.%) | 10.7 |
| Vulcanization accelerator (Curative #20, a product of | 5.8 |
| DuPont; organic phosphonium salt: 33wt.%, and fluororubber (Viton F-4.5) : 67wt.%) | |
| Epoxy group-containg silane coupling agent (SH-6040, a product of Toray • Dow Coming) | 1.0 (in terms of solid matters) |
| Epoxy-modified phenol resin (Epiclon N695, a product of Dainippon Ink & Chemicals) | 34.5 |

The foregoing components except the vulcanization accelerator were kneaded together through a pressure kneader, thereafter discharging rubber compounds, and then mixed with the vulcanization accelerator through open rolls to give a rubber composition.

The rubber composition was dissolved into a mixed solvent of methyl ethyl ketone-methanol (9:1 by volume) with a rotating type stirrer to make a solid matter concentration 25 wt.%, thereby obtaining a rubber solution (viscosity 2.5 Pa • s, using BH type viscosimeter, rotor : No.4, rotating number : 4 rpm). The rubber solution was applied to a SUS301 metallic sheet (0.2 mm in thickness) free from any surface treatment except solvent defatting, using a flow coater to a dried thickness of 25 µm, followed by drying to evaporate off the solvent, and by vulcanization in an oven at 220°C for 3 minutes, thereby obtaining a fluororubber laminated metallic sheet.

The resulting fluororubber-laminated metallic sheet was subjected to tests to determine the following items :

### Sealability (product surface smoothness) :

When an air pressure of 0.15 MPa was applied to the fluororubber-laminated metallic sheet in the form of a gasket, sealability was evaluated as follows : a leaked air volume rate of less than 5 ml/min. was marked as "○", that of 5 to less than 10 ml/min. as "Δ", and that of 10 ml/min. or more as " × "

### Compression resistance test (rubber flowability) :

When a stainless steel projection was allowed to press against the fluororubber-laminated metallic sheet at 150°C and a surface pressure of 2-4 tons/cm² (196-392 MPa) for 5 minutes, the resulting compressed rubber flow state was evaluated with the following 5 grades, where 4th-5th grades were marked as "○", 3rd grade as "Δ", and 2nd and 1st grade as "×"
5th grade : no metal exposure without substantial rubber flow
4th grade : no metal exposure with a small rubber flow
3rd grade : no metal exposure with an intermediate rubber flow (i.e.
   an appreciable rubber flow took place without any metal exposure, in other words, no such a large rubber flow as to cause metal exposure took place)
2nd grade : small metal exposure with a large rubber flow
1st grade : large metal exposure with a large rubber flow

### Air-heated aging resistance test :

The fluororubber-laminated metal sheet was exposed to air at 200°C for 72 hours in a gear type oven, followed by a cross-cut test according to JIS K5400 corresponding to ASTM D3002, where the peeling degree of rubber layer was evaluated with the following 5 grades, and 4th and 5th grades were marked as "○", 3rd grade as "Δ", and 2nd and 1 st grades as "×"
5th grade : 100% remaining rubber
4th grade : less than 100% to 95% or more remaining rubber
3rd grade : less than 95% to 85% or more remaining rubber
2nd grade : less than 85% to 65% or more remaining rubber
1st grade : less than 65% remaining rubber

### Anti-freezing liquid resistance test :

The fluororubber-laminated metallic sheet was dipped into water in a pressure vessel at 150°C for 100 hours, followed by the same cross-cut test and evaluation as in the air-heated aging resistance test

### Oil resistance test :

The fluororubber-laminated metallic sheet was dipped into IRM903 oil at 200°C for 15 hours, followed by the same cross-cut test and evaluation as in the air heated aging resistance test

### Sticking test (reworkability) :

An aluminum-steel sheet was allowed to press against the fluororubber-laminated metallic sheet at 150°C and a surface pressure of 0.5 tons (49 MPa) for 10 minutes in the same manner as in the compression resistance test, followed by cooling and evaluation of peeled state of the rubber layer, where less than 10% rubber sticked to the aluminum steel sheet was marked as "○", 10-50% as "Δ" , and 50-100% (complete sticking) as "×"

### Abrasion resistance test :

The fluororubber-laminated metallic sheet was subjected to a Taber abrasion test according to JIS K6264 corresponding to ASTM D5963, where an abrasion volume loss of less than 0.2 ml was marked as "○", an abrasion resistance of 0.2-0.5 ml as "Δ", and that of 0.5 ml or more as "×"

### Durability test:

A rubber solution (300 ml) was poured into an empty mayonnaise bottle (volume: 450 ml; produced by Sansyo Co., Ltd.), and the bottle was closed with an inside plug and a cap to be tightly sealed under the following conditions: temperature: ambient temperature, humidity: 30 to 50%, then after being left for 24 hours, viscosity was measured with a BH-type viscometer using a rotor No. 4 at a rotating number of 4 rpm, and the results were evaluated as follows: durability at a viscosity of less than 5 Pa·s was marked as "○", 5 to 20 Pa·s as "Δ", and 20 Pa·s or more as "×"

In these tests, mark "○" means a very satisfactory level, "Δ" no substantial performance problem, and "×" a substantial performance problem.

### EXAMPLES 1 to 5

The amount of epoxy group-containing silane coupling agent (SH-6040) in Comparative Example 1 was changed to 2, 3, 4.6, 7, or 9 parts by weight, respectively.

### EXAMPLE 6

5 parts by weight of methacryloxy group-containing silane coupling agent (APZ6030, produced by Dow Corning Toray Co., Ltd.) was used in place of the epoxy group-containing silane coupling agent used in Comparative Example 1.

### EXAMPLE 7

5 parts by weight of acryloxy group-containing silane coupling agent (KBM5103, produced by Dow Corning Toray Co., Ltd.) was used in place of the epoxy group-containing silane coupling agent used in Comparative Example 1.

### COMPARATIVE EXAMPLE 2

The same amount (4.6 parts by weight) of a silane coupling agent (APZ-6633, produced by Dow Corning Toray Co., Ltd.) comprising a mixture of amino group-containing alkoxysilane and vinyl group-containing alkoxysilane (weight ratio = 1:1) was used in place of the epoxy group-containing silane coupling agent of Example 3.

Table 1 below shows the measurement results obtained in the above Examples and Comparative Examples, together with the amounts of silane coupling agents used (unit: part by weight).

**Table 1**

| | | Example | | | | | | | |
|---|---|---|---|---|---|---|---|---|---|
| | Comp Ex.1 | 1 | 2 | 3 | 4 | 5 | 6 | 7 | Comp Ex. 2 |
| [Silane coupling agent] | | | | | | | | | |
| Epoxy group-containing | 1 | 2 | 3 | 4.6 | 7 | 9 | - | - | - |
| Methacryloxy group-containing | - | - | - | - | - | - | 5 | - | - |
| Acryloxy group-containing | - | - | - | - | - | - | - | 5 | - |
| Amino group-containing | - | - | - | - | - | - | - | - | 4.6 |

| [Measurement item] | | | | | | | | | |
|---|---|---|---|---|---|---|---|---|---|
| Sealability | ○ | ○ | ○ | ○ | ○ | ○ | ○ | ○ | × |
| Compression resistance test | ○ | ○ | ○ | ○ | ○ | Δ | ○ | ○ | × |
| Air-heated aging resistance test | × | Δ | ○ | ○ | ○ | Δ | ○ | ○ | ○ |
| Anti-freezing liquid resistance test | Δ | ○ | ○ | ○ | ○ | ○ | ○ | ○ | ○ |
| Oil resistance test | ○ | ○ | ○ | ○ | ○ | ○ | ○ | ○ | ○ |
| Sticking test | Δ | ○ | ○ | ○ | ○ | ○ | ○ | ○ | ○ |
| Abrasion resistance test | ○ | ○ | ○ | ○ | ○ | ○ | ○ | ○ | ○ |
| Durability test | ○ | ○ | ○ | ○ | ○ | ○ | ○ | ○ | × |

### EXAMPLES 8 to 11, and COMPARATIVE EXAMPLES 3 and 4

In Example 3, which used 4.6 parts by weight of epoxy group-containing silane coupling agent, the amount of epoxy-modified phenol resin (Epiclon N695) was changed in various ways, and the same measurements were carried out.

Table 2 below shows the obtained measurement results, together with the amount of phenol resin used (unit: part by weight).

**Table 2**

| | | Example | | | | | |
|---|---|---|---|---|---|---|---|
| | Comp. Ex. 3 | 8 | 9 | 3 | 10 | 11 | Comp. Ex. 4 |
| [Phenol resin] | | | | | | | |
| Epoxy-modified | 10 | 15 | 20 | 34.5 | 40 | 50 | 60 |

| [Measurement item] | | | | | | | |
|---|---|---|---|---|---|---|---|
| Sealability | Δ | ○ | ○ | ○ | ○ | ○ | Δ |
| Compression resistance test | Δ | ○ | ○ | ○ | ○ | Δ | Δ |
| Air-heated aging resistance test | ○ | ○ | ○ | ○ | ○ | ○ | Δ |
| Anti-freezing liquid resistance test | × | Δ | ○ | ○ | ○ | ○ | × |
| Oil resistance test | × | Δ | ○ | ○ | ○ | ○ | × |
| Sticking test | Δ | Δ | ○ | ○ | ○ | ○ | ○ |
| Abrasion resistance test | ○ | ○ | ○ | ○ | ○ | ○ | Δ |
| Durability test | ○ | ○ | ○ | ○ | ○ | ○ | ○ |

### EXAMPLES 12 and 13

In Example 3, which used 4.6 parts by weight of epoxy group-containing silane coupling agent and 34.5 parts by weight of epoxy-modified phenol resin (Epiclon N695), the amounts of vulcanizing agent (Curative #30) and vulcanization accelerator (Curative #20) were changed in various ways, and the same measurements were carried out.

Table 3 below shows the obtained measurement results, together with the amounts of vulcanization systems used (unit: part by weight).

**Table 3**

| | Ex. 12 | Ex. 3 | Ex. 13 |
|---|---|---|---|
| [Vulcanization system] | | | |
| Vulcanizing agent | 3 | 10.7 | 20 |
| Vulcanization accelerator | 2 | 5.8 | 9 |

| [Measurement item] | | | |
|---|---|---|---|
| Sealability | ○ | ○ | ○ |
| Compression resistance test | Δ | ○ | ○ |
| Air-heated aging resistance test | ○ | ○ | ○ |
| Anti-freezing liquid resistance test | Δ | ○ | Δ |
| Oil resistance test | Δ | ○ | Δ |
| Sticking test | ○ | ○ | Δ |
| Abrasion resistance test | ○ | ○ | Δ |
| Durability test | ○ | ○ | ○ |

## Claims

1. A fluororubber-metal laminate sheet , which comprises a metallic sheet and a vulcanized fluororubber layer provided on the metallic sheet by applying to the metallic sheet a composition comprising (A) 100 parts by weight of a polyol-vulcanizable fluororubber, (B) 10-50 parts by weight of an amorphous graphite, (C) 15-50 parts by weight of a phenol resin, (D) 2-9 parts by weight of an epoxy group- or (meth)acryloxy group-containing silane coupling agent, (E) 3-20 parts by weight of a polyol-based vulcanizing agent, and (F) 2-9 parts by weight of a vulcanization accelerator followed by vulcanization of the fluororubber composition to form the laminate.

2. The fluororubber-metal laminate sheet according to claim 1, wherein the metallic sheet is a metallic sheet free from chromating treatment or chromating substitute treatment.

3. The fluororubber-metal laminate sheet according to claim 2, wherein the metallic sheet free from chromating treatment or chromating substitute treatment is a solvent-defatted or alkali-defatted metallic sheet.

4. The fluororubber-metal laminate sheet according to claim 1, wherein the amorphous graphite in the fluororubber composition has a maximum particle size of not more than 45 µm and an average particle size of not more than 20 µm.

5. The fluororubber-metal laminate sheet according to claim 1, wherein the phenol resin in the fluororubber composition is an epoxy-modified phenol resin.

6. The fluororubber-metal laminate sheet according to claim 1, wherein the phenol resin in the fluororubber composition is a novolak type phenol resin derived from p-alkyl-substituted phenol or a resol type phenol resin.

7. The fluororubber-metal laminate sheet according to claim 1, wherein the vulcanization accelerator in the fluororubber composition is at least one quaternary onium salt selected from a quaternary phosphonium salt and a quaternary ammonium salt.

8. The fluororubber-metal laminate sheet according to claim 1 further comprising a non-sticking layer on the vulcanized fluororubber layer.

9. A process for the preparation of a fluororubber-metal laminate sheet according to claim 1 wherein a vulcanized fluororubber layer is provided on a metallic sheet by applying to the metallic sheet a composition comprising (A) 100 parts by weight of a polyol-vulcanizable fluororubber, (B) 10-50 parts by weight of an amorphous graphite, (C) 15-50 parts by weight of a phenol resin, (D) 2-9 parts by weight of an epoxy group- or (meth)acryloxy group-containing silane coupling agent, (E) 3-20 parts by weight of a polyol-based vulcanizing agent, and (F) 2-9 parts by weight of a vulcanization accelerator followed by vulcanization of the fluororubber composition to form the laminate, and wherein the fluororubber composition is applied as a one-pot type coating agent.

10. The process according to claim 9 wherein the one-pot type coating agent has a solid matters concentration of 20-60 wt.%.

## Patentansprüche

1. Fluorkautschuk-Metall-Laminat-Folie, umfassend eine metallische Folie und eine vulkanisierte Fluorkautschuk-Schicht, die auf der metallischen Folie aufgebracht ist, durch Aufbringen auf der metallischen Folie einer Zusammensetzung, umfassend (A) 100 Gewichtsteile eines Polyolvulkanisierbaren Fluorkautschuks, (B) 10-50 Gewichtsteile eines amorphen Graphits, (C) 15-50 Gewichtsteile eines Phenolharzes, (D) 2-9 Gewichtsteile eines-Epoxygrupppe- oder Methacryloxygruppe-enthaltenden Silan-Kupplungsmittels, (E) 3-20 Gewichtsteile eines Vulkanisierungsmittels auf Polyolbasis und (F) 2-9 Gewichtsteile eines Vulkanisationsbeschleunigers, gefolgt von der Vulkanisation der Fluorkautschuk-Zusammensetzung, um das Laminat zu bilden.

2. Fluorkautschuk-Metall-Laminat-Folie nach Anspruch 1, wobei die metallische Folie eine metallische Folie ist, die frei von Chromatierungsbehandlung oder Chromatierungsersatzbehandlung ist.

3. Fluorkautschuk-Metall-Laminat-Folie nach Anspruch 2, wobei die von Chromatierungsbehandlung oder Chromatierungsersatzbehandlung freie metallische Folie eine Lösungsmittelentfettete oder Alkali-entfettete metallische Folie ist.

4. Fluorkautschuk-Metall-Laminat-Folie nach Anspruch 1, wobei das amorphe Graphit in der Fluorkautschuk-Zusammensetzung eine maximale Teilchengröße von nicht mehr als 45 µm und eine durchschnittliche Teilchengröße von nicht mehr als 20 µm aufweist.

5. Fluorkautschuk-Metall-Laminat-Folie nach Anspruch 1, wobei das Phenolharz in der Fluorkautschuk-Zusammensetzung ein Epoxy-modifiziertes Phenolharz ist.

6. Fluorkautschuk-Metall-Laminat-Folie nach Anspruch 1, wobei das Phenolharz in der Fluorkautschuk-Zusammensetzung ein von p-Alkyl-substituiertem Phenol abgeleitetes Phenolharz vom Novolaktyp oder ein Phenolharz vom Resoltyp ist.

7. Fluorkautschuk-Metall-Laminat-Folie nach Anspruch 1, wobei der Vulkanisationsbeschleuniger in der Fluorkautschuk-Zusammensetzung mindestens ein quaternäres Oniumsalz, ausgewählt aus einem quaternären Phosphoniumsalz und einem quaternären Ammoniumsalz, ist.

8. Fluorkautschuk-Metall-Laminat-Folie nach Anspruch 1, des Weiteren umfassend eine nicht-klebende Schicht auf der vulkanisierten Fluorkautschuk-Schicht.

9. Verfahren zur Herstellung einer Fluorkautschuk-Metall-Laminat-Folie nach Anspruch 1, wobei eine vulkanisierte Fluorkautschuk-Schicht aufgebracht wird auf einer metallischen Folie durch Aufbringen auf der metallischen Folie einer Zusammensetzung, umfassend (A) 100 Gewichtsteile eines Polyolvulkanisierbaren Fluorkautschuks, (B) 10-50 Gewichtsteile eines amorphen Graphits, (C) 15-50 Gewichtsteile eines Phenolharzes, (D) 2-9 Gewichtsteile eines Epoxygruppe oder Methacryloxygruppe-enthaltenden Silan-Kupplungsmittels, (E) 3-20 Gewichtsteile eines Vulkanisierungsmittels auf Polyol-Basis und (F) 2-9 Gewichtsteile eines Vulkanisationsbeschleunigers, gefolgt von der Vulkanisation der Fluorkautschuk-Zusammensetzung, um das Laminat zu bilden, und wobei die Fluorkautschuk-Zusammensetzung als ein Beschichtungsmittel vom Ein-Topf-Typ aufgebracht wird.

10. Verfahren nach Anspruch 9, wobei das Beschichtungsmittel vom Ein-Topf-Typ eine Feststoffkonzentration von 20-60 Gew.-% aufweist.

## Revendications

1. Feuille stratifiée de caoutchouc fluoré-métal qui comprend une feuille métallique et une couche de caoutchouc fluoré vulcanisée placée sur la feuille métallique par application, sur la feuille métallique, d'une composition comprenant (A) 100 parties en poids d'un caoutchouc fluoré vulcanisable avec un polyol, (B) de 10 à 50 parties en poids d'un graphite amorphe, (C) de 15 à 50 parties en poids d'une résine phénolique, (D) de 2 à 9 parties en poids d'un agent de couplage de silane contenant un groupe époxy ou un groupe (méth)acryloxy, (E) de 3 à 20 parties en poids d'un agent de vulcanisation à base de polyol et (F) de 2 à 9 parties en poids d'un accélérateur de vulcanisation, suivie par la vulcanisation de la composition de caoutchouc fluoré pour former le stratifié.

2. Feuille stratifiée de caoutchouc fluoré-métal selon la revendication 1, dans laquelle la feuille métallique est une feuille métallique exempte de traitement de chromatation ou de traitement de substitution de chromatation.

3. Feuille stratifiée de caoutchouc fluoré-métal selon la revendication 2, dans laquelle la feuille métallique exempte de traitement de chromatation ou de traitement de substitution de chromatation est une feuille métallique dégraissée par un solvant ou dégraissée par un composé alcalin.

4. Feuille stratifiée de caoutchouc fluoré-métal selon la revendication 1, dans laquelle le graphie amorphe dans la composition de caoutchouc fluoré a une taille de particule maximale de pas plus de 45 µm et une taille de particule moyenne de pas plus de 20 µm.

5. Feuille stratifiée de caoutchouc fluoré-métal selon la revendication 1, dans laquelle la résine phénolique dans la composition de caoutchouc fluoré est une résine phénolique modifiée par un époxy.

6. Feuille stratifiée de caoutchouc fluoré-métal selon la revendication 1, dans laquelle la résine phénolique dans la composition de caoutchouc fluoré est une résine phénolique de type novolaque dérivée d'un phénol substitué par un groupe p-alkyle ou d'une résine phénolique de type résol.

7. Feuille stratifiée de caoutchouc fluoré-métal selon la revendication 1, dans laquelle l'accélérateur de vulcanisation dans la composition de caoutchouc fluoré est au moins un sel d'onium quaternaire choisi parmi un sel de phosphonium quaternaire et un sel d'ammonium quaternaire.

8. Feuille stratifiée de caoutchouc fluoré-métal selon la revendication 1, comprenant en outre une couche non collante sur la couche de caoutchouc fluoré vulcanisée.

9. Procédé de préparation d'une feuille stratifiée de caoutchouc fluoré-métal selon la revendication 1, dans lequel une couche de caoutchouc fluoré vulcanisée est positionnée sur une feuille métallique par application, sur la feuille métallique, d'une composition comprenant (A) 100 parties en poids d'un caoutchouc fluoré vulcanisable avec un polyol, (B) de 10 à 50 parties en poids d'un graphite amorphe, (C) de 15 à 50 parties en poids d'une résine phénolique, (D) de 2 à 9 parties en poids d'un agent de couplage de silane contenant un groupe époxy ou un groupe (méth)acryloxy, (E) de 3 à 20 parties en poids d'un agent de vulcanisation à base de polyol et (F) de 2 à 9 parties en poids d'un accélérateur de vulcanisation, suivie par la vulcanisation de la composition de caoutchouc fluoré pour former le stratifié, et dans lequel la composition de caoutchouc fluoré est appliquée sous forme d'agent de revêtement de type unique.

10. Procédé selon la revendication 9, dans lequel l'agent de revêtement de type unique a une concentration en matières solides de 20 à 60 % en poids.
